# EUROPÄISCHE PATENTSCHRIFT

(11) **EP 2 179 464 B1**
(45) Veröffentlichungstag und Bekanntmachung des Hinweises auf die Patenterteilung: **21.12.2011**
(21) Anmeldenummer: 08784714.1
(22) Anmeldetag: 11.07.2008
(51) Int. Cl.: H01M 10/0525

(54) **ELEKTRODEN UND LITHIUM-IONEN-ZELLEN MIT NEUARTIGEM ELEKTRODENBINDER**
ELECTRODES AND LITHIUM-ION CELLS WITH A NOVEL ELECTRODE BINDER
ELECTRODES ET CELLULES LITHIUM-ION COMPRENANT UN NOUVEAU TYPE DE LIANT D'ÉLECTRODE

(30) Priorität: 25.07.2007 DE 102007036653
(43) Veröffentlichungstag der Anmeldung: 28.04.2010
(73) Patentinhaber: VARTA Microbattery GmbH, 73479 Ellwangen (DE); VOLKSWAGEN VARTA Microbattery Forschungsgesellschaft mbH & Co. KG, 73479 Ellwangen (DE)
(72) Erfinder: HOCHGATTERER, Nikolaus, Stefan, A-8010 Graz (AT); KOLLER, Stefan, A-8010 Graz (AT); SCHWEIGER, Mario, Rene, A-8054 Graz (AT); WINTER, Martin, D- 48149 Münster (DE); WURM, Calin, 73479 Ellwangen (DE); PERNER, Arno, 803 39 München (DE); WÖHRLE, Thomas, 70469 Stuttgart (DE)
(74) Vertreter: Patentanwälte Ruff, Wilhelm, Beier, Dauster & Partner
(86) Internationale Anmeldenummer: PCT/EP2008/005673
(87) Internationale Veröffentlichungsnummer: WO 2009/012899

(56) Entgegenhaltungen:
- EP-A- 0 762 521
- US-A- 3 877 983
- US-A1- 2004 043 293

## Beschreibung

Die vorliegende Erfindung betrifft eine Elektrode, insbesondere für eine Lithium-Ionen-Batterie, eine Batterie umfassend mindestens eine solche Elektrode sowie eine neue Verwendung eines Polysaccharids.

Galvanische Elemente wie Lithium-lonen-Zellen weisen in der Regel Kompositelektroden auf, enthaltend Partikel aus elektrochemisch aktiven Bestandteilen, einen Binder sowie Stromkollektoren. Der Binder sorgt für die mechanische Stabilität der Elektrode, insbesondere soll er die Kontaktierung der Partikel untereinander sowie zum Strom kollektor gewährleisten. Dekontaktierungen sowohl zwischen einzelnen elektrochemisch aktiven Partikeln als auch zwischen den Partikeln und dem Stromkollektor können beispielsweise bedingt durch Gasungen in der Elektrode in Folge einer Elektrolytzersetzung oder bedingt durch die elektrochemisch induzierte volumetrische Dynamik einer Elektrode auftreten. Dekontaktierungen sind häufig mit schleichenden Kapazitätsverlusten verbunden, welche letztendlich zu einer Unbrauchbarkeit der betroffenen Elektrode führen können.

Aus dem Stand der Technik sind vor allem Binder auf Basis von fluorierten Polymeren und Copolymeren bekannt, insbesondere auf Basis von Polyvinylidenfluoriden (PVdF) und Polyvinylidenfluorid-Hexafluorpropylen (PVdF-HFP). Elektroden mit solchen Bindern sind beispielsweise in der EP 1 261 048 und in der US 5 296 318 beschrieben.

Aus der EP 14 89 673 sind Elektroden mit einem Binder auf Basis von Styren-Butadien-Kautschuk bekannt. Bei der Herstellung der Elektroden wird zur Viskositätseinstellung Natrium-Carboxymethylzellulose verwendet.

In einer Elektrode bilden die als Binder eingesetzten Polymere bzw. Copolymere gewöhnlich eine Matrix, in der die elektrochemisch aktiven Materialien fein dispergiert vorliegen. Handelsübliche elektrochemisch aktive Materialien wie z.B. Graphit sind in aller Regel vollständig unlöslich in den erwähnten Polymeren bzw. Copolymeren. Eine feste Bindung mit der Bindermatrix gehen sie nicht ein. Vielmehr erfolgt eine Anbindung physikalisch, z.B. über Adhäsionskräfte, oder mechanisch. Kapazitätsverluste in Folge von Dekontaktierungen sind bei solchen Elektroden häufig bereits nach wenigen Ladungs- und Entladungszyklen messbar.

Aus ökologischer und ökonomischer Sicht ist insbesondere die Verwendung der genannten teilfluorierten Polymerbinder problematisch, da ihre Verarbeitung den Einsatz von organischen Lösungsmitteln wie N-Methylpyrollidin-2-on oder Aceton erfordert. Entsprechende Sicherheits- und Arbeitsschutzmaßnahmen sind erforderlich. Die Polymerbinder lösen sich in diesen Lösungsmitteln zumindest teilweise und lassen sich dann gut weiterverarbeiten. Allerdings besteht insbesondere für N-Methylpyrollidin-2-on der Verdacht, gesundheitsschädlich zu sein. Die Lösungsmittel müssen nach ihrer Verwendung in der Regel verbrannt werden, wodurch der Kohlendioxid-Ausstoss steigt.

Der vorliegenden Erfindung liegt die Aufgabe zugrunde, Batterien bereitzustellen, die im Hinblick auf ihre kapazitive Leistungsfähigkeit und ihre Lebensdauer aus dem Stand der Technik bekannten Batterien überlegen sind. Insbesondere soll die kapazitive Leistungsfähigkeit bei fortschreitendem Alter der Batterie weniger stark abnehmen, als dies bei bekannten Batterien der Fall ist.

Diese Aufgabe wird gelöst durch die Elektrode mit den Merkmalen des Anspruchs 1, die Batterie mit den Merkmalen des Anspruchs 14. Bevorzugte Ausführungsformen der erfindungsgemäßen Elektrode finden sich in den ab-3 hängigen Ansprüchen 2 bis 13. Einige der im Folgenden beschriebenen Merkmale sind sowohl der erfindungsgemäßen Elektrode als auch der erfindungsgemäßen Batterie zuordenbar. Sie sollen entsprechend jeweils für alle gelten, auch wenn sie nur im Zusammenhang mit einem der erfindungsgemäßen gegenstände beschrieben werden. Der Wortlaut sämtlicher Ansprüche wird hiermit durch Bezugnahme zum Inhalt dieser Beschreibung gemacht.

Eine erfindungsgemäße Elektrode eignet sich insbesondere für eine Lithium-lonen-Batterie. Bei einer Lithium-lonen-Batterie handelt es sich um eine elektrochemische Spannungsquelle auf der Basis von Lithium, die im Gegensatz zu vielen herkömmlichen Batterien wiederaufladbar ist. Lithium-lonen-Batterien existieren in verschiedenen Ausführungsformen. Eine Weiterentwicklung ist beispielsweise die Lithium-Polymer-Batterie, bei der insbesondere ein Elektrolyt auf Polymerbasis zum Einsatz kommt.

Eine erfindungsgemäße Elektrode umfasst eine Matrix basierend auf mindestens einem Polysaccharid sowie Partikel aus mindestens einem elektrochemisch aktiven Material, welche in die Matrix eingebettet sind. Dabei ist die Elektrode in besonders bevorzugten Ausführungsformen im wesentlichen frei von synthetischen Polymerverbindungen.

Wie eingangs beschrieben wurde, weisen aus dem Stand der Technik bekannte Elektroden stets Binder aus synthetischen Polymeren wie den erwähnten Fluorpolymeren oder dem aus der EP 14 89 673 bekannten Styren-Butadien-Kautschuk auf. Überraschenderweise wurde gefunden, dass sich derartige Binder vollständig durch einen Binder auf Basis eines Biopolymers, nämlich auf Basis von mindestens einem Polysaccharid, ersetzen lassen.

Der Begriff "im wesentlichen frei von" soll im Zusammenhang mit dem Anteil an synthetischen Polymerverbindungen in einer erfindungsgemä-βen Elektrode bedeuten, dass diese allenfalls in sehr geringen Mengen enthalten sind, die für sich nicht ausreichend sind, um eine Binderfunktion wahrnehmen zu können, beispielsweise in Mengen von weniger als 0,1 Gew.-% (bezogen auf den Feststoffanteil der Elektrode). Besonders bevorzugt ist eine erfindungsgemäß Elektrode vollständig frei von synthetischen Polymerverbindungen.

Unter dem Begriff "synthetische Polymerverbindungen" sind vorliegend Polymerverbindungen zu verstehen, die nicht durch Modifikation natürlicher Polymere herstellbar sondern insbesondere vollsynthetisch sind. Beispiele synthetischer Polymerverbindungen im Sinne der vorliegenden Anmeldung sind insbesondere substituierte und unsubstituierte Polyolefine oder Silikone.

Die auf mindestens einem Polysaccharid basierende Matrix einer erfindungsgemäßen Elektrode bildet eine dreidimensionale Struktur aus, innerhalb der die elektrochemisch aktiven Partikel vorzugsweise homogen verteilt sind. Der Begriff "Matrix" bezeichnet somit vorliegend schlicht ein Material, in das Partikel aus einem oder mehreren weiteren Materialien eingebettet sind.

Unter dem Begriff "elektrochemisch aktives Material" soll vorliegend ein Material verstanden werden, das unmittelbar an den elektrochemischen Vorgängen in der erfindungsgemäßen Elektrode beteiligt ist, insbesondere ein Material, das Lithium-lonen reversibel ein- und auslagern kann.

In besonders bevorzugten Ausführungsformen zeichnet sich eine erfindungsgemäße Elektrode dadurch aus, dass mindestens ein Teil der Partikel über kovalente Bindungen mit der Matrix verbunden ist.

Unter dem Begriff "kovalente Bindung" ist vorliegend insbesondere eine chemische Bindung zu verstehen, die über eine Kondensationsreaktion gebildet wurde, besonders bevorzugt über eine Kondensationsreaktion unter Abspaltung von Wasser. Entsprechend weisen die Bindungspartner (Matrix bzw. matrixbildendes Polysaccharid und Partikel) in bevorzugten Ausführungsformen funktionelle Gruppen auf, die miteinander Kondensationsreaktionen eingehen können (worauf später noch näher eingegangen wird).

Aus der kovalenten Bindung zwischen den Partikeln und der Matrix resultiert eine besonders feste und widerstandsfähige Elektrodenstruktur, die den elektrodeninternen mechanischen Belastungen bei Ladungs- und Entladungsvorgängen hervorragend standhalten kann. Dies wirkt sich insbesondere vorteilhaft auf die Lebensdauer einer erfindungsgemäßen Elektrode auf.

Vorzugsweise umfasst mindestens ein Teil der Partikel ein kohlenstoff basiertes, lithiuminterkalierendes Material bzw. besteht zumindest teilweise aus diesem. Dies gilt insbesondere dann, wenn es sich bei der erfindungsgemäßen Elektrode um eine negative Elektrode (Anode) handelt. Bei dem kohlenstoffbasierten, lithiuminterkalierenden Material handelt es sich vorzugsweise um Graphit.

Auch geeignete nicht-kohlenstoffbasierte lithiuminterkalierende Materialien können im Rahmen der vorliegenden Erfindung verwendet werden. Diese können sowohl in Kombination mit einem kohlenstoffbasierten lithiuminterkalierenden Material als auch allein verwendet werden.

Geeignete kohlenstoffbasierte und nicht-kohlenstoffbasierte lithiuminterkalierende Materialien sind dem Fachmann grundsätzlich bekannt und bedürfen keiner näheren Erläuterung.

Es ist bevorzugt, dass zumindest ein Teil der Partikel aus dem kohlenstoffbasierten, lithiuminterkalierenden Material eine mittlere Partikelgrö-βe zwischen 1 µm und 50 µm, insbesondere zwischen 4 µm und 30 µm, aufweist.

In weiteren bevorzugten Ausführungsformen einer erfindungsgemäßen Elektroden ist es vorgesehen, dass mindestens ein Teil der Partikel ein Metall und/oder ein Halbmetall umfasst (bzw. zumindest teilweise aus diesem besteht), das mit Lithium eine Legierung ausbilden kann. Auch dies gilt insbesondere dann, wenn es sich bei der erfindungsgemäßen Elektrode um eine negative Elektrode handelt.

Es ist bevorzugt, dass zumindest ein Teil der Partikel aus dem Metall und/oder dem Halbmetall eine mittlere Partikelgröße von weniger als 1 µm aufweist.

Bei dem erwähnten Metall und/oder Halbmetall handelt es sich insbesondere um Aluminium, Silizium, Antimon, Zinn, Cobalt oder eine Mischung davon. Als Mischung ist insbesondere eine Zinn/Antimon- oder eine Zinn-Cobalt-Mischung bevorzugt.

Eine erfindungsgemäße Elektrode kann ausschließlich auf dem erwähnten kohlenstoffbasierten, lithiuminterkalierenden Material oder auf einem Metall und/oder Halbmetall basieren, das mit Lithium eine Legierung ausbilden kann.

Besonders bevorzugt weist eine erfindungsgemäße Elektrode sowohl Partikel mit einem kohlenstoffbasierten, lithiuminterkalierenden Material als auch Partikel, die ein Metall und/oder Halbmetall umfassen, auf. Das Mischungsverhältnis zwischen den Partikeln aus dem kohlenstoffbasierten, lithiuminterkalierenden Material und den Partikeln umfassend ein Metall und/oder ein Halbmetall liegt in diesen Fällen besonders bevorzugt zwischen 1:1 und 9:1.

Eine erfindungsgemäße Elektrode weist in bevorzugten Ausführungsformen ein Metall und/oder ein Halbmetall umfassende Partikel auf, deren Oberfläche mindestens teilweise oxidiert ist.

Metallische und halbmetallische Partikel können auf ihrer Oberfläche OH-Gruppen (Hydroxylgruppen) aufweisen, wenn die Oberfläche zumindest teilweise oxidiert ist. Dieser Fall kann insbesondere dann eintreten, wenn die Partikel in Kontakt mit Wasser gebracht werden. Über solche OH-Gruppen können grundsätzlich weitere Substanzen mit geeigneten funktionellen Gruppen an die Oberfläche der metallischen bzw. halbmetallischen Partikel anbinden, insbesondere durch eine Kondensationsreaktion unter Wasserabspaltung. Dies ist auch vorliegend der bevorzugte Weg, um die oben erwähnte kovalente Bindung der Partikel mit der Matrix zu bilden. So können metallische oder halbmetallische Partikel, beispielsweise Partikel aus einer Zinn-Antimon-Legierung oder aus Silizium, zusammen mit einem matrixbildenden Polysaccharid in Wasser bzw. in eine wässrige Lösung eingetragen werden (ein Feststoffanteil zwischen 15 und 45 Gew.% ist hierbei bevorzugt). Gegebenenfalls können Tenside in geringen Mengen zugesetzt werden. Die Partikel können dabei oberflächlich oxidieren und es können sich OH-Gruppen an der Oberfläche ausbilden. Mit dem matrixbildenden Polysaccharid kann dann die bereits mehrfach erwähnte Kondensationsreaktion stattfinden.

In einer bevorzugten Ausführungsform weist eine erfindungsgemäße Elektrode Partikel auf, die mindestens teilweise, vorzugsweise vollständig, aus Lithiumkobaltoxid bestehen. Dies ist insbesondere dann der Fall, wenn es sich bei der erfindungsgemäßen Elektrode um eine positive Elektrode handelt. Da Partikel auf Basis von Lithiumkobaltoxid (Li-CoO₂) oxidischer Natur sind, können auch sie gegebenenfalls über eine Kondensationsreaktion an eine Matrix aus einem Polysaccharid anbinden.

Zusätzlich zu den Partikeln auf Basis von Lithiumkobaltoxid oder alternativ zu diesen kann eine erfindungsgemäße Elektrode auch Lithiummetalloxide der allgemeinen Formel LiMO₂ (mit M = mindestens ein Metall aus der Gruppe mit Co, Mn, Ni und V) und/oder LiMPO₄ (mit M = Fe und/oder Mn) als Aktivmaterial aufweisen.

Als Polysaccharide sind erfindungsgemäß insbesondere mit reaktiven Gruppen modifizierte Polysaccharide geeignet, wobei es sich bei den reaktiven Gruppen insbesondere um funktionelle Gruppen handelt, die mit OH-Gruppen eine Kondensationsreaktion eingehen können. Besonders bevorzugt handelt es sich bei den reaktiven Gruppen um Hydroxy-, Carboxyl-, Carboxylat-, Carbonyl-, Cyano-, Sulfonsäure-, Halogencarbonyl-, Carbamoyl-, Thiol- und/oder Amino-Gruppen.

Polysaccharide sind Vielfachzucker mit Monosaccharideinheiten, wobei in der Regel eine statistische Molekülgrößenverteilung vorliegt. Mehrere Monosaccharide (z.B. Glukose oder Fruktose) bilden dabei eine Kette. Erfindungsgemäß sind insbesondere Polysaccharide der allgemeinen Formel -[Cₓ(H₂O)_{y}]ₙ - mit x = 5 oder 6 und y = x - 1 bevorzugt.

Vorzugsweise besteht die Matrix einer erfindungsgemäßen Elektrode zumindest teilweise aus einem Polysaccharid mit 50 bis 10.000 Monosaccharideinheiten.

In einer besonders bevorzugten Ausführungsform besteht die Matrix einer erfindungsgemäßen Elektrode zumindeste teilweise, vorzugsweise vollständig, aus einem Zellulosederivat. Das Zellulosederivat liegt in besonders bevorzugter Ausführungsform in salzartiger Form vor, insbesondere als Alkali-, Erdalkali- oder Ammoniumsalz.

Bei Zellulose handelt es sich um ein unverzweigtes Polysaccharid, das in der Regel aus mehreren 100 bis 10.000 β-D-Glukose-Molekülen gebildet ist, letztere verknüpft über β-(1,4)-glukosidische Bindungen. Zellulose ist in Wasser und in den meisten organischen Lösungsmitteln unlöslich. Daher sind erfindungsgemäß insbesondere wasserlösliche bzw. zumindest in Wasser quellbare Derivate der Zellulose bevorzugt.

Besonders bevorzugt basiert die Matrix auf einem Zellulosederivat der folgenden Formel: 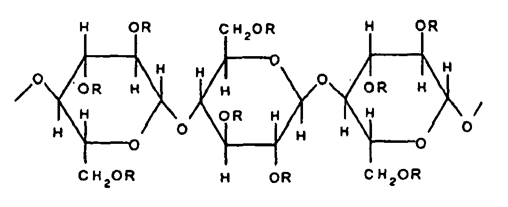 R umfasst dabei insbesondere mindestens ein Mitglied aus der Gruppe mit H, (CH₂)ₙOH, (CH₂)ₙO(CH₂)ₙCH₃, (CH₂)ₙCO(CH₂)ₙCH₃, (CH₂)ₙCHO, (CH₂)ₙCOOH, (CH₂)ₙN(COOMe)₂, (CH₂)ₙCH₃, (CH₂)ₙCN und (CH₂)ₙCOOMe, wobei Me für Li, Na, K, Rb, Cs oder Ca steht, n Werte zwischen 1 und 10 annehmen kann und mindestens 1 R ungleich H ist.

Besonders bevorzugt weist eine erfindungsgemäße Elektrode eine Matrix auf, die auf mindestens einer Carboxyalkylzellulose basiert, vorzugsweise auf Carboxymethylzellulose und/oder Carboxyethylzellulose, insbesondere aus Carboxymethylzellulose besteht.

Carboxymethylzellulosen sind bekannte Derivate der Zellulose, bei denen mindestens ein Teil der OH-Gruppen der Zellulose als Ether mit einer Carboxymethyl-Gruppe verknüpft ist. Zur Herstellung von Carboxymethylzellulose wird in aller Regel Zellulose in einem ersten Schritt in reaktive Alkalizellulose überführt und anschließend mit Chloressigsäure zur Carboxymethylzellulose umgesetzt. Die Zellulose-Struktur bleibt bei dieser Vorgehensweise erhalten. Insbesondere unter alkalischen Bedingungen sind Carboxyalkylzellulosen in der Regel relativ gut in Wasser löslich.

Besonders bevorzugt weist eine erfindungsgemäße Elektrode eine Matrix auf Basis von Natrium-Carboxyalkylzellulose, insbesondere auf Basis von Natrium-Carboxymethylzellulose, auf.

Es ist bevorzugt, dass erfindungsgemäß verwendete Zellulosederivate einen Substitutionsgrad zwischen 0,5 und 3, insbesondere zwischen 0,8 und 1,6, aufweisen. Der Substitutionsgrad gibt die durchschnittliche Anzahl der modifizierten Hydroxylgruppen pro Monosaccharid-Einheit in einem Zellulosederivat an. Da in der Zellulose pro Monosaccharideinheit drei Hydroxylgruppen für eine Umsetzung zur Verfügung stehen, beträgt der maximal erreichbare Substitutionsgrad vorliegend 3.

Es ist weiterhin bevorzugt, dass eine erfindungsgemäße Elektrode einen Leitfähigkeitsverbesserer aufweist. Als Leitfähigkeitsverbesserer sind insbesondere Ruß, Graphit oder eine Mischung aus beidem geeignet.

Des weiteren weist eine erfindungsgemäße Elektrode in aller Regel einen Stromkollektor, insbesondere einen metallischen Stromkollektor, auf. Handelt es sich bei der erfindungsgemäßen Elektrode um eine negative Elektrode, so sind Stromkollektoren aus Kupfer bevorzugt. Im Falle einer positiven Elektrode sind Stromkollektoren aus Aluminium bevorzugt.

Sofern eine erfindungsgemäße Elektrode als das mindestens eine Polysaccharid ein Zellulosederivat aufweist, so ist dieses vorzugsweise in einem Anteil zwischen 1 Gew.-% und 15 Gew.-%, insbesondere zwischen 2 Gew.-% und 8 Gew.-%, in der Elektrode enthalten (jeweils bezogen auf den Feststoffgehalt der Elektrode).

Des weiteren kann es bevorzugt sein, dass eine erfindungsgemäße Elektrode einen organischen Elektrolyten mit einem lithiumbasierten Leitsalz, beispielsweise Lithiumtetrafluoroborat, aufweist.

Ebenfalls Gegenstand der vorliegenden Erfindung ist eine Batterie, insbesondere Lithium-lonen-Batterie, die mindestens eine erfindungsgemäße Elektrode umfasst.

Eine erfindungsgemäße Batterie weist vorzugsweise eine Einzelzelle mit mindestens einer positiven und mindestens eine negativen Elektrode auf, zwischen denen ein Separator angeordnet ist. In bevorzugten Ausführungsformen weist eine erfindungsgemäße Batterie mehrere Einzelzellen auf.

Sowohl bei der mindestens einen positiven als auch bei der mindestens einen negativen Elektrode kann es sich um erfindungsgemäße Elektroden, also um Elektroden mit einer auf mindestens einem Polysaccharid basierenden Matrix handeln.

Die Elektroden und die Matrix sind bereits ausführlich beschrieben worden, auf die betreffenden Abschnitte der Beschreibung wird hiermit Bezug genommen und verwiesen.

Des weiteren ist die Verwendung eines Polysaccharids als Binder für elektrochemisch aktive Elektrodenmaterialien Gegenstand der vorliegenden Erfindung. Wie oben erwähnt, wurde von der Anmelderin überraschenderweise gefunden, dass sich konventionelle Binder vollständig durch Binder auf Basis von mindestens einem Polysaccharid ersetzen lassen. In bevorzugten Ausführungsformen wird das mindestens eine Polysaccharid in Elektrodenzusammensetzungen als Binder verwendet, die frei von synthetischen Polymerverbindungen sind.

Bevorzugt verwendbare Polysaccharide, insbesondere die bevorzugt verwendbaren salzartigen Zellulosederivate, sind oben bereits ausführlich beschrieben worden. Zur Vermeidung von Wiederholungen wird auch hier auf die entsprechenden Passagen Bezug genommen und ausdrücklich verwiesen.

Weitere Merkmale der Erfindung ergeben sich aus den Zeichnungen in Verbindung mit den Unteransprüchen. Hierbei können einzelne Merkmale jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner weise einschränkend zu verstehen.

### Beispiel 1:

Zur Herstellung einer negativen Elektrode werden 8 Gew.-% Natriumcarboxymethylzellulose (Walocell® CRT10G) in Wasser eingetragen und zur vollständigen Quellung gebracht. Ein Gemisch aus Stromableiterfäden aus Kupfer (35 Gew.-%) und nanopartikulärer Aktivmasse (Zinn-Antimon, 65 Gew.-%) wird in einem Ausmaß von 92 Gew.-% eingetragen. Die so erhaltene Elektrodenpaste wird auf eine Kupferfolie in der Stärke von 200 µm aufgerakelt.

So hergestellte negative Elektroden werden in 3-Elektroden Swagelok-Typ Zellen mit 6 Vliesseparatoren (Freudenberg 2190) und einem Celgard 2400 gegen Lithium (als positive Elektrode) charakterisiert. Als Elektrolytgemisch dient eine Standardmixtur von fluorierten Leitsalzen in organischen Lösungsmitteln.

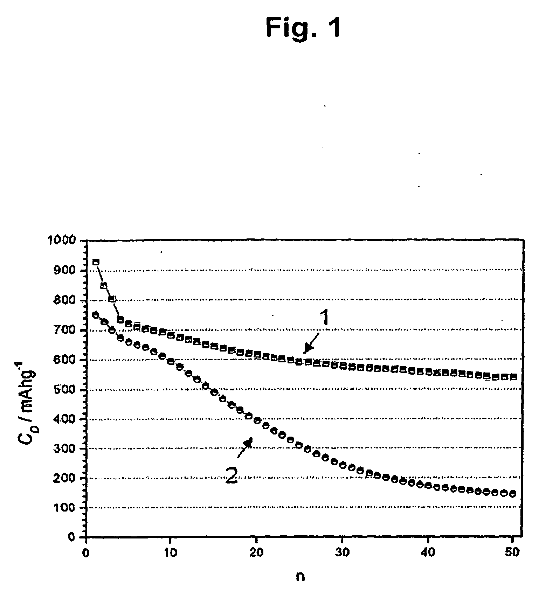

Die Entladekapazitäten C_{D} der hergestellten Zinn-Antimon-KupferElektroden, bezogen auf die Elektrodenaktivmasse, sind in Fig. 1 in Abhängigkeit von der Zyklenzahl n dargestellt. Die Entladung, durchgeführt bei Raumtemperatur, erfolgt mit einem Strom der Größe 1C (950 mA/g).

Kurve 1 charakterisiert das Anodenmaterial hergestellt mit dem neuen Bindersystem.

Kurve 2 zeigt im Vergleich dazu die Kapazität und deren Abnahme mit der Zyklenzahl einer vergleichbaren Anode, bei der 8 Gew.-% PVdF-HFP Copolymer prozessiert in NMP an Stelle der erfindungsgemäß verwendeten Natriumcarboxymethylzellulose zum Einsatz kamen.

### Beispiel 2:

Zur Herstellung von Silizium-Graphit-Komposit-Anoden werden 8 Gew.-% Natriumcarboxymethylzellulose (Walocell^{®} CRT2000PPA12) in Wasser eingetragen und zur vollständigen Quellung gebracht. Des weiteren werden sequentiell 20% nanopartikuläres Silizium (Nanostructured and Amorphous Materials Los Alamos) und 5% Karbon Nanofasern (Electrovac AG, LHT-XT) eingebracht und hochenergetisch dispergiert. 5% Leitruß (Super P) und 62% Graphit (Naturgraphit, potato shaped) werden abschließend eingetragen und dispergiert.

Die so erhaltene Elektrodenpaste wird auf eine Kupferfolie (Schlenk) in der Stärke von 200 µm aufgerakelt.

Die Anoden werden in 3-Elektroden Swagelok-Typ Zellen mit 6 Vliesseparatoren (Freudenberg 2190) und einem Celgard 2400 gegen Lithium charakterisiert. Als Elektrolytgemisch dient eine Standardmixtur von fluorierten Leitsalzen in organischen Lösungsmitteln.

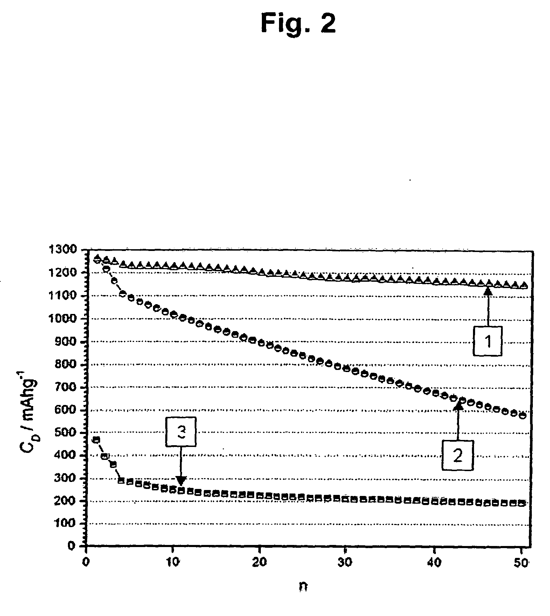

In Fig. 2 sind die Entladekapazitäten C_{D} der so hergestellten Silizium-Graphit-Anoden bezogen auf die Elektrodenaktivmasse in Abhängigkeit von der Zyklenzahl n dargestellt. Die Entladung, durchgeführt bei Raumtemperatur, erfolgt mit einem Strom der Größe 1C (1250 mA/g).

Kurve 1 zeigt den Verlauf der Entladekapazität der Anode mit zunehmender Zyklenzahl n hergestellt mit dem neuen Binder.

Kurve 2 zeigt im Vergleich dazu die Kapazität und deren Abnahme mit steigender Zyklenzahl einer Anode, bei deren Herstellung 4 Gew.-% Styren Butadien Kautschuk (SBR) als Binder und 4 % Na-Carboxymethylzellulose als Dispergiermittel eingesetzt wurde.

Kurve 3 beschreibt die kapazitive Charakteristik einer Silizium-Graphit-Komposit-Anode, bei der 10 Gewichtsprozent PVdF-HFP Copolymer als Trägerpolymer prozessiert in NMP zum Einsatz kamen.

## Patentansprüche

1. Elektrode, insbesondere für eine Lithium-lonen-Batterie, umfassend eine auf mindestens einem Polysaccharid basierende Matrix sowie Partikel aus mindestens einem elektrochemisch aktiven Material, die in die Matrix eingebettet sind, wobei es sich bei mindestens einem Teil der Partikel um metallische Partikel aus einem Metall und/oder Halbmetall, das mit Lithium eine Legierung ausbilden kann, handelt.

2. Elektrode nach Anspruch 1, **dadurch gekennzeichnet, dass** die Elektrode im Wesentliche frei von synthetischen Polymerverbindungen ist.

3. Elektrode nach Anspruch 1 oder Anspruch 2, **dadurch gekennzeichnet, dass** mindestens ein Teil der Partikel über kovalente Bindungen mit der Matrix verbunden ist.

4. Elektrode nach einem der vorhergehenden Ansprüche, **dadurch gekennzeichnet, dass** mindestens ein Teil der Partikel ein kohlenstoffbasiertes, lithiuminterkalierendes Material umfasst.

5. Elektrode nach Anspruch 1, **dadurch gekennzeichnet, dass** die Oberfläche der ein Metall und/oder ein Halbmetall umfassenden Partikel mindestens teilweise oxidiert ist.

6. Elektrode nach einem der Ansprüche 1 bis 3, **dadurch gekennzeichnet, dass** mindestens ein Teil der Partikel Lithiumcobaltoxid umfasst.

7. Elektrode nach einem der vorhergehenden Ansprüche, **dadurch gekennzeichnet, dass** das Polysaccharid mit reaktiven Gruppen modifiziert ist, die mit OH-Gruppen eine Kondensationsreaktion eingehen können, wobei es sich bei den reaktiven Gruppen bevorzugt um Hydroxy-, Carboxyl-, Carboxylat-, Carbonyl-, Cyano-, Sulfonsäure-, Halogencarbonyl-, Carbamoyl-, Thiol- und/oder Amino-Gruppen handelt.

8. Elektrode nach einem der vorhergehenden Ansprüche, **dadurch gekennzeichnet, dass** die Matrix ein Polysaccharid aus 50 bis 10000 Monosaccharideinheiten aufweist.

9. Elektrode nach einem der vorhergehenden Ansprüche, **dadurch gekennzeichnet, dass** die Matrix als Polysaccharid ein Zellulosederivat aufweist.

10. Elektrode nach einem der vorhergehenden Ansprüche, **dadurch gekennzeichnet, dass** die Matrix auf einem Zellulosederivat mit der Formel 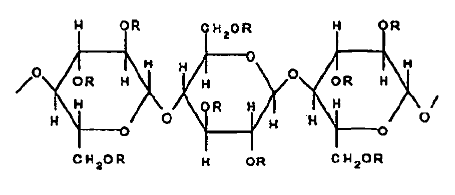 basiert, wobei R mindestens ein Mitglied aus der Gruppe mit H, (CH₂)ₙOH, (CH₂)ₙCOOH, (CH₂)ₙO(CH₂)ₙCH₃, (CH₂)ₙCO(CH₂)ₙCH₃, (CH₂)ₙCHO, (CH₂)ₙN(COOMe)₂, (CH₂)ₙCH₃, (CH₂)ₙCN und (CH₂)ₙCOOMe umfasst, wobei Me für Li, Na, K, Rb, Cs oder Ca steht, n Werte zwischen 1 und 10 annehmen kann und mindestens 1 R ungleich H ist.

11. Elektrode nach einem der vorhergehenden Ansprüche, **dadurch gekennzeichnet, dass** die Matrix als Polysaccharid mindestens eine Carboxyalkylzellulose aufweist, insbesondere eine Carboxymethylzellulose und/oder eine Carboxyethylzellulose.

12. Elektrode nach einem der vorhergehenden Ansprüche, **dadurch gekennzeichnet, dass** das Zellulosederivat einen Substitutionsgrad zwischen 0,5 und 3, insbesondere zwischen 0,8 und 1,6, aufweist.

13. Elektrode nach einem der Ansprüche 9 bis 12, **dadurch gekennzeichnet, dass** sie das Zellulosederivat in einem Anteil zwischen 1 Gew.-% und 15 Gew.-% (bezogen auf den Feststoffgehalt der Elektrode) aufweist.

14. Batterie, insbesondere Lithium-lonen-Batterie, umfassend mindestens eine Elektrode nach einem der vorhergehenden Ansprüche.

## Claims

1. An electrode, in particular for a lithium ion battery, comprising a matrix based on at least one polysaccharide and also particles of at least one electrochemically active material which are embedded in the matrix, wherein at least part of the particles comprise a metal and/or semimetal which can form an alloy with lithium.

2. The electrode as claimed in claim 1, **characterized in that** the electrode is essentially free of synthetic polymeric compounds.

3. The electrode as claimed in claim 1 or claim 2, **characterized in that** at least part of the particles are bound via covalent bonds to the matrix.

4. The electrode as claimed in any of the preceding claims, **characterized in that** at least part of the particles comprise a carbon-based, lithium-intercalating material.

5. The electrode as claimed in claim 1, **characterized in that** the surface of the particles comprising a metal and/or a semimetal is at least partially oxidized.

6. The electrode as claimed in any of the claims 1 to 3, **characterized in that** at least part of the particles comprise lithium cobalt oxide.

7. The electrode as claimed in any of the preceding claims, **characterized in that** the polysaccharide is modified with reactive groups which can undergo a condensation reaction with OH groups, the reactive groups being hydroxy, carboxyl, carboxylate, carbonyl, cyano, sulfonic acid, halocarbonyl, carbamoyl, thiol and/or amino groups.

8. The electrode as claimed in any of the preceding claims, **characterized in that** the matrix has a polysaccharide composed of from 50 to 10 000 monosaccharide units.

9. The electrode as claimed in any of the preceding claims, **characterized in that** the matrix has a cellulose derivative as polysaccharide.

10. The electrode as claimed in any of the preceding claims, **characterized in that** the matrix is based on a cellulose derivative having the formula 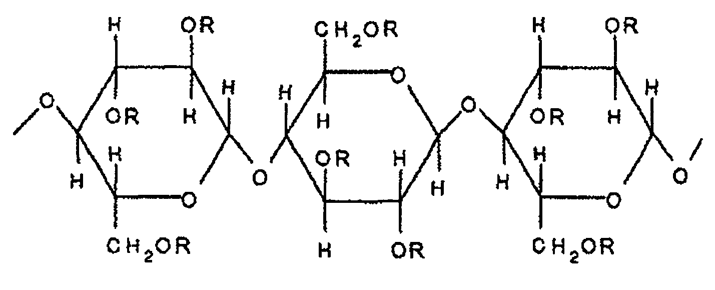 where R comprises at least one member of the group consisting of H, (CH₂)ₙOH, (CH₂)ₙCOOH, (CH₂)ₙO(CH₂)ₙCH₃, (CH₂)ₙCO(CH₂)ₙCH₃, (CH₂)ₙCHO, (CH₂)ₙN(COOMe)₂, (CH₂)ₙCH₃, (CH₂)ₙCN and (CH₂)ₙCOOMe, where Me is Li, Na, K, Rb, Cs or Ca, n can be from 1 to 10, and at least one radical R is not H.

11. The electrode as claimed in any of the preceding claims, **characterized in that** the matrix has at least one carboxyalkyl cellulose, in particular a carboxymethyl cellulose and/or a carboxyethyl cellulose, as polysaccharide.

12. The electrode as claimed in any of the preceding claims, **characterized in that** the cellulose derivative has a degree of substitution in the range from 0.5 to 3, in particular from 0.8 to 1.6.

13. The electrode as claimed in any of the claims 9 to 12, **characterized in that** it comprises the cellulose derivative in a proportion of from 1% by weight to 15% by weight (based on the solids content of the electrode).

14. A battery, in particular a lithium ion battery, comprising at least one electrode as claimed in any of the preceding claims.

## Revendications

1. Électrode, notamment pour batterie au lithium-ion, comprenant une matrice à base d'au moins un polysaccharide et des particules d'au moins un matériau électrochimiquement actif noyées dans la matrice, **caractérisée en ce qu'**au moins une partie des particules comprend des particules métalliques d'un métal et/ou d'un semi-métal qui peut former un alliage avec le lithium.

2. Électrode selon la revendication 1, **caractérisée en ce que** l'électrode est sensiblement exempte de composés polymères synthétiques.

3. Électrode selon la revendication 1 ou la revendication 2, **caractérisée en ce qu'**au moins une partie des particules est liée par des liaisons covalentes à la matrice.

4. Électrode selon l'une des revendications précédentes, **caractérisée en ce qu'**au moins une partie des particules comprend un matériau à base de carbone s'intercalant dans le lithium.

5. Électrode selon la revendication 1, **caractérisée en ce que** la surface des particules métalliques comprenant un métal et/ou un semi-métal est au moins partiellement oxydée.

6. Électrode selon l'une des revendications 1 à 3, **caractérisée en ce qu'**au moins une partie des particules comprend de l'oxyde de lithium cobalt.

7. Électrode selon l'une des revendications précédentes, **caractérisée en ce que** le polysaccharide est modifié par des groupes réactifs qui peuvent réagir avec des groupes OH par une réaction de condensation, les groupes réactifs étant de préférence des groupes hydroxyle, carboxyle, carboxylate, carbonyle, cyano, acide sulfonique, halogénocarbonyle, carbamoyle, thiol et/ou des groupes aminés.

8. Électrode selon l'une des revendications précédentes, **caractérisée en ce que** la matrice comprend un polysaccharide de 50-10000 motifs de monosaccharide.

9. Électrode selon l'une des revendications précédentes, **caractérisée en ce que** la matrice comprend un dérivé de cellulose en tant que polysaccharide.

10. Électrode selon l'une des revendications précédentes, **caractérisée en ce que** la matrice est à base d'un dérivé de cellulose répondant à la formule 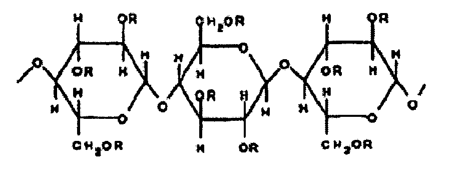 dans laquelle R comprend au moins un élément du groupe constitué par H, (CH₂)ₙOH, (CH₂)ₙCOOH, (CH₂)ₙO(CH₂)ₙCH₃, (CH₂)ₙCO (CH₂)ₙCH₃, (CH₂)ₙCHO, (CH₂)ₙN (COOMe)₂, (CH₂)ₙCH₃, (CH₂)ₙCN, et (CH₂)ₙCOOMe, où Me représente Li, Na, K, Rb, Cs ou Ca, n peut avoir des valeurs comprises entre 1 et 10 et au moins 1 R n'est pas H.

11. Électrode selon l'une des revendications précédentes, **caractérisée en ce que** la matrice comprend au moins une carboxyalkylcellulose en tant que polysaccharide, notamment une carboxyméthylcellulose et/ou une carboxyéthylcellulose.

12. Électrode selon l'une des revendications précédentes, **caractérisée en ce que** le dérivé de cellulose présente un degré de substitution compris entre 0,5 et 3, notamment entre 0,8 et 1,6.

13. Électrode selon l'une des revendications 9 à 12, **caractérisée en ce qu'**elle comprend le dérivé de cellulose dans une proportion comprise entre 1 % en poids et 15 % en poids (par rapport à la teneur en matière solide de l'électrode).

14. Batterie, notamment batterie au lithium-ion, comprenant au moins une électrode selon l'une des revendications précédentes.
